# EUROPÄISCHE PATENTSCHRIFT

(11) **EP 4 065 379 B1**
(45) Veröffentlichungstag und Bekanntmachung des Hinweises auf die Patenterteilung: **28.05.2025**
(21) Anmeldenummer: 20819625.3
(22) Anmeldetag: 26.11.2020
(51) Int. Cl.: B42D 25/324, B42D 25/342, B42D 25/328

(54) **SICHERHEITSELEMENT MIT KIPPUNGSABHÄNGIGER MOTIVDARSTELLUNG UND VERFAHREN ZUR DESSEN HERSTELLUNG**
SECURITY ELEMENT HAVING TILT-DEPENDENT MOTIF DEPICTION AND METHOD FOR PRODUCTION THEREOF
ÉLÉMENT DE SÉCURITÉ AYANT UNE REPRÉSENTATION DE MOTIF DÉPENDANT DE L'INCLINAISON ET SON PROCÉDÉ DE PRODUCTION

(30) Priorität: 27.11.2019 DE 102019008250
(43) Veröffentlichungstag der Anmeldung: 05.10.2022
(73) Patentinhaber: Giesecke+Devrient Currency Technology GmbH, 81677 München (DE)
(72) Erfinder: HÖFER, Moritz, 81549 München (DE); DEHMEL, Raphael, 83115 Neubeuern (DE)
(74) Vertreter: Giesecke+Devrient IP
(86) Internationale Anmeldenummer: PCT/EP2020/025540
(87) Internationale Veröffentlichungsnummer: WO 2021/104674

(56) Entgegenhaltungen:
- EP-A1- 2 123 470
- WO-A1-2017/184581
- WO-A1-2018/219498
- WO-A1-2019/077419
- WO-A2-2005/106601
- WO-A2-2008/008635
- US-A- 5 199 744

## Beschreibung

Die Erfindung bezieht sich auf ein Sicherheitselement zur Herstellung von Wertdokumenten, wie Banknoten, Schecks oder dergleichen, das eine Struktur aufweist, die ein erstes und ein zweites Motiv präsentiert, welche beim Kippen des Sicherheitselementes über einen Kippwinkelbereich ihre Erscheinung ändern, wobei die Struktur erste Mikroelemente, die gemäß einem ersten Muster angeordnet sind und das erste Motiv präsentieren, und zweite Mikroelemente, die gemäß einem zweiten Muster angeordnet sind und das zweite Motiv präsentieren, aufweist und das erste und das zweite Muster auf einem Flächenbereich des Sicherheitselements ineinander verschachtelt sind.

Die Erfindung bezieht sich weiter auf ein Verfahren zum Herstellen eines Sicherheitselements für Wertdokumente, wie Banknoten, Schecks oder dergleichen, wobei das Verfahren die Schritte aufweist: Erzeugen einer Struktur auf einem Substrat, die ein erstes und ein zweites Motiv präsentiert, welche beim Kippen des Sicherheitselementes über einen Kippwinkelbereich ihre Erscheinung ändern, wobei die Struktur erste Mikroelemente, die gemäß einem ersten Muster angeordnet werden und das erste Motiv präsentieren, und zweite Mikroelemente, die gemäß einem zweiten Muster angeordnet werden und das zweite Motiv präsentieren, aufweist und das erste und das zweite Muster auf einem Flächenabschnitt des Sicherheitselements ineinander verschachtelt werden.

Ein solches, gattungsgemäßes Sicherheitselement sowie ein solches, gattungsgemäßes Herstellverfahren sind aus der WO 2018/206147 A1 bekannt.

Aus der Druckschrift WO 2019/077419 A1 ist eine optische Vorrichtung bekannt, die eine Linsenanordnung und eine Vielzahl von ersten und zweiten Segmenten, die unter der Linsenanordnung angeordnet sind, umfasst. Bei einem ersten Betrachtungswinkel präsentiert die Linsenanordnung ein erstes Bild zur Betrachtung, ohne das zweite Bild zur Betrachtung zu präsentieren, und bei einem zweiten Betrachtungswinkel, der sich vom ersten Betrachtungswinkel unterscheidet, präsentiert die Linsenanordnung das zweite Bild zur Betrachtung, ohne das erste Bild zur Betrachtung zu präsentieren.

Auch die Druckschrift WO 2017/184581 A1 beschreibt eine Sicherheitsvorrichtung mit einer Linsenanordnung und einer Vielzahl von ersten und zweiten Segmenten, die unter der Linsenanordnung angeordnet sind. Mindestens ein erstes oder zweites Segment umfasst eine oder mehrere Mikrostrukturen oder eine oder mehrere Nanostrukturen, die dazu konfiguriert sind, eine oder mehrere Farben für das erste oder zweite Bild zu erzeugen

In der Druckschrift WO 2018/219498 A1 ist ferner ein Sicherheitselement beschrieben, das zwei Kippeffekte miteinander verbindet. Das Sicherheitselement besteht aus zwei unterschiedlichen Prägestrukturen, die in zwei benachbarten Bereichen vorliegen. Erste Prägestrukturen stellen dabei unabhängig oder mindestens nahezu unabhängig vom Betrachtungs- bzw. Kippwinkel in mindestens einer Ebene eine erste Information dar, zweite Prägestrukturen bei einem bestimmten Betrachtungs- bzw. Kippwinkelbereich eine zweite Information. Bei diesem Betrachtungswinkel ergänzen sich die Information der ersten Prägestrukturen und die Information der zweiten Prägestrukturen zu einer Gesamtinformation.

Die Druckschrift US5,199,744 A befasst sich mit einem Substrat, beispielsweise einer Banknote, das ein Sicherheitsmerkmal trägt, das in Verbindung mindestens ein geprägtes transitorisches Bild, beispielsweise ein latentes Bild, und einen geprägten linearen Bereich umfasst. Die Anordnung ist derart, dass jedes Bild und jeder lineare Bereich optisch erkannt werden kann, wenn der geprägte Bereich des Substrats aus verschiedenen Winkeln betrachtet wird.

Die Darstellung von achromatischen Motiven auf Basis von Mikrospiegeln ist aus der DE 102017004586 A1 oder WO 2012/048847 A1 bekannt. Weitere Sicherheitselemente, die zum Teil Mikrospiegel verwenden, finden sich in der WO 2016/177470 A1, der WO 2009/017824 A2, der WO 2016/180522 A1 und der WO 2014/060089 A2.

Bei dem gattungsgemäßen Sicherheitselement ist es möglich, die Mikroelemente - im gattungsgemäßen Stand der Technik als Mikrospiegel ausgebildet - so anzuordnen, dass zwei Motive nur unter bestimmtem Betrachtungswinkel auf die Banknote sichtbar sind und beim Kippen der Banknote sich verändern, beispielsweise von einem Motiv zu einem anderen wechseln. Ein solcher Motivwechsel wird beispielsweise bei Mikrospiegeln dadurch erreicht, dass die Spiegelsteigung entlang der Senkrechten zur Kippachse in einem Abschnitt nur positive, in einem anderen Abschnitt nur negative Werte aufweist. Dieser Ansatz führt dazu, dass bei einer Mittenansicht, üblicherweise bei senkrechter Aufsicht, also bei ungekipptem Sicherheitselement, beide Motive gleichzeitig sichtbar sind und sich räumlich überlagern. Im gattungsgemäßen Stand der Technik wird dies für zusätzliche Effekte genutzt. Da der Betrachter die beiden Motive in senkrechter Draufsicht, wie sie sehr häufig angenommen wird, nicht trennen kann, führt dies jedoch oftmals zu einem optisch nicht ansprechenden Eindruck. Zudem können ungeschulte Betrachter, die das Sicherheitselement nur aus einem kleinen Winkelbereich sehen, möglicherweise gar nicht bemerken, dass beim Kippen ein Motivwechsel auftreten würde, weil es keinen Hinweis darauf gibt, dass ein Verkippen neue Information offenlegen könnte.

Der Erfindung liegt die Aufgabe zugrunde, demgegenüber ein besser erkennbares und damit letztlich fälschungssicheres Sicherheitselement bereitzustellen sowie ein entsprechendes Herstellverfahren anzugeben.

Die Erfindung ist in den unabhängigen Ansprüchen definiert. Die abhängigen Ansprüche betreffen bevorzugte Weiterbildungen.

Es ist ein Sicherheitselement zur Herstellung von Wertdokumenten, wie Banknoten, Schecks oder dergleichen vorgesehen. Es weist eine Struktur auf, die ein erstes und ein zweites Motiv präsentiert. Die Motive ändern beim Kippen des Sicherheitselementes über einen Kippwinkelbereich hinweg ihre Erscheinung. Die Struktur umfasst dabei erste Mikroelemente und zweite Mikroelemente, die gemäß einem ersten bzw. zweiten Muster angeordnet sind. Die ersten Mikroelemente präsentieren das erste Motiv, die zweiten Mikroelemente das zweite Motiv. Die Motive erscheinen in einem Flächenbereich, in dem das erste und das zweite Muster auf dem Sicherheitselement ineinander verschachtelt sind. Beim Kippen des Sicherheitselementes findet eine Erscheinungsänderung der Motive statt. Die Mikroelemente sind hierzu entsprechend ausgebildet. Die erste Mikroelemente präsentieren das erste Motiv so, dass es innerhalb des Kippwinkelbereichs einer bestimmen Start-Kippstellung im Flächenbereich ganz sichtbar ist. Es füllt insbesondere den ganzen Flächenbereich aus. Ändert man die Kippstellung, nimmt der Teil des Flächenbereichs, in dem das erste Motiv sichtbar ist, mit zunehmendem Kippen ab. Beim Erreichen einer bestimmten End-Kippstellung ist das Motiv gar nicht mehr sichtbar. Dazu komplementär sind die zweiten Mikroelemente gestaltet hinsichtlich der Darstellung des zweiten Motivs. Sie präsentieren das zweite Motiv in dem verbleibenden Rest, der gegenüber dem Teil des ersten Flächenbereichs, in dem die ersten Mikroelemente beim Kippen das erste Motiv anzeigen, verbleibt. Dieser verbleibende Rest des Flächenbereichs zeigt das zweite Motiv aufgrund der Wirkung der zweiten Mikroelemente. Damit ist das zweite Motiv bei der Start-Kippstellung gar nicht sichtbar, da in diesem Zustand von den ersten Mikroelementen das erzeugte, erste Motiv den ganzen Flächenbereich belegt. Bei zunehmendem Kippen wird der Teil, in dem die ersten Mikroelemente das erste Motiv präsentieren kleiner und im gegenläufigen Maße wächst der Rest, in dem die zweiten Mikroelemente das zweite Motiv präsentieren. Bei der End-Kippstellung erscheint dann das zweite Motiv im Flächenbereich zur Gänze.

Anstelle einer globalen Zuweisung eines Kippwinkelbereichs für jedes der beiden Motive haben nun räumliche Teilbereiche der Motive jeweils eigene Winkelbereiche. Beim Kippen findet der Wechsel zwischen den beiden Motiven in einer Art Überblendung statt, bei der der Teil, in dem das erste Motiv sichtbar ist, immer kleiner wird und der Rest des Flächenbereichs, in dem das zweite Motiv sichtbar ist, demenentsprechend wächst. Die beiden Motive werden damit nie in Überlagerung dargestellt, sondern ihr Anteil am Flächenbereich wächst oder schrumpft je nach Kippstellung. Damit ist für einen ungeschulten Betrachter in der Mittelstellung klar erkennbar, dass das Sicherheitselement zwei Motive bereitstellt, denn in der Kippstellung sieht der Betrachter üblicherweise das erste Motiv teilweise und auch das zweite Motiv im verbleibenden Rest des Flächenbereiches - jedoch ohne dass die beiden Motive überlagert wären.

Dieser Effekt ist natürlich dann besonders prominent und gut sichtbar, wenn im jeweiligen Teil des Flächenbereichs auch nur der zugeordnete Abschnitt des jeweiligen Motivs sichtbar ist. Es entsteht damit der Eindruck, dass das eine Motiv mit zunehmenden Kippen mehr und mehr abgeschnitten wird, wohingegen das andere Motiv mit dem Kippen im gleichen Maße immer vollständiger wird. Die Änderung der Motive betreffen also in bevorzugter Weise nicht ein Vergrößern oder Verkleinern der Motive, sondern es sind je nach Kippstellung nur diejenigen Abschnitte des Motivs sichtbar, die dem verbleibenden Teil bzw. Rest des Flächenbereichs zugeordnet sind - bezogen natürlich auf das gesamte Motiv, welches in der End-Kippstellung bzw. der Start-Kippstellung vollständig sichtbar ist.

Das Sicherheitselement realisiert einen kontinuierlichen und zugleich leicht erkennbaren und nachvollziehbaren Übergang zwischen den beiden Motiven beim Kippen. Dabei ist es möglich, dass in einem Randstreifen, mit dem der Rest des Flächenbereichs an den Teil des Flächenbereichs angrenzt, keines der Motive sichtbar ist. Die sich gegenseitig beim Kippen verdrängenden bzw. voreinander zurückweichenden Motive sind somit durch eine Art "neutrale Zone" voneinander getrennt, was den Motivwechsel besonders prägnant macht.

Besonders bevorzugt haben die beiden Motive unterschiedliche Farben. Dies macht den Effekt einerseits besonders prägnant und behebt anderseits ein Problem, das im Stand der Technik beim Wechsel zwischen Motiven mit verschiedenen Farben gegeben war: dort führte die in der Mittenansicht gegebene Überlagerung der beiden unterschiedlich farbigen Motive zu einem besonderes unschönen Eindruck bzw. zu einer schweren Wahrnehmbarkeit der einzelnen Motive.

Die Grenze, entlang der das eine Motiv zurückweicht und das andere Motiv anwächst, wenn das Sicherheitselement gekippt wird, kann eine sich bewegende gerade Linie sein, beispielsweise eine sich geradlinig bewegende Linie oder sich eine rotierend bewegende Linie. Gleichermaßen ist es möglich, dass die Motive durch eine sich vergrößernde bzw. verkleinernde geschlossene Kurve voneinander begrenzt sind, insbesondere durch einen Kreis. Dies realisiert eine Art Pump-Übergang.

Die Mikroelemente können, wie im Stand der Technik der gattungsgemäßen Art vorgesehen, durch Mikrospiegel realisiert werden. Mit Vorteil sind die Mikrospiegel der ersten und/oder die Mikrospiegel der zweiten Mikroelemente mit einer einen Farbeindruck erzeugenden Farbbeschichtung versehen.

Die Farbbeschichtungen der Mikrospiegel sind in vorteilhaften Gestaltungen durch lasierende Farben gebildet. Auch Metallisierungen, beispielsweise aus Aluminium, Silber oder einer Legierung, etwa aus Kupfer und Aluminium, kommen in Frage, ebenso Dünnschichtaufbauten, insbesondere farbkippende Dünnschichtaufbauten, Gold-Blau oder Silizium-Aluminium-Dünnschichten. Die Farbbeschichtungen können auch durch lasierende Farben mit einer hinterlegten metallischen Verspiegelung, beispielsweise aus Aluminium, gebildet sein. Die Farbbeschichtungen können dabei ein lasierendes Bild aus mehreren lasierenden Farben darstellen, das mit einer Verspiegelung, beispielsweise aus Aluminium, hinterlegt ist. Auch Lumineszenzfarben, insbesondere Fluoreszenzfarben mit einer metallischen Verspiegelung kommen als Farbbeschichtungen in Betracht. Die Farbbeschichtungen können auch durch Strukturfarben, insbesondere durch Nano- und Binärstrukturen, gebildet sein, welche auf oder in die Mikrospiegel geprägt sind. Schließlich kommen auch Nanopartikelfarben als Farbbeschichtungen in Betracht, wie etwa Gold-Blau-Partikel, verschiedene Effektpigmente, farbkippende Pigmente oder Supersilber. Die Farbbeschichtungen sind vorzugsweise direkt auf die Mikrospiegel aufgebracht und folgen deren Reliefverlauf.

Gleichermaßen können die Mikroelemente auch durch eine Kombination aus Mikrobildern und Mikrolinsen oder durch diffraktive Mikrostrukturen oder magnetisch ausrichtbare Spezialpigmente verwirklicht werden. Kombinationen sind möglich.

Für die Herstellung des Sicherheitselementes kommen Prägeverfahren in Frage, wie sie im genannten Stand der Technik für Mikrospiegelstrukturen offenbart sind.

Die Erfindung umfasst weiter ein Wertdokument, insbesondere ein Sicherheitssubstrat, das ein Sicherheitselement der genannten Art aufweist.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
- Fig. 1: eine Draufsicht auf eine Banknote,
- Fig. 2: eine Schemadarstellung zur Erläuterung von Kippwinkeln beim Betrachten eines Sicherheitselementes der Banknote,
- Fig. 3: eine Schemadarstellung zur Erläuterung des Aufbaus eines Flächenbereichs des Sicherheitselementes der Fig. 1 und 2,
- Fig. 4A-4F: verschiedene Darstellungen eines ersten und eines zweiten Motives, die bei unterschiedlichen Kippwinkeln des Sicherheitselementes der Fig. 1-3 auftreten, und
- Fig. 5-8: Schemadarstellungen für verschiedene Ausführungsformen hinsichtlich eines Motivwechsels beim Sicherheitselement der Fig. 1-3.

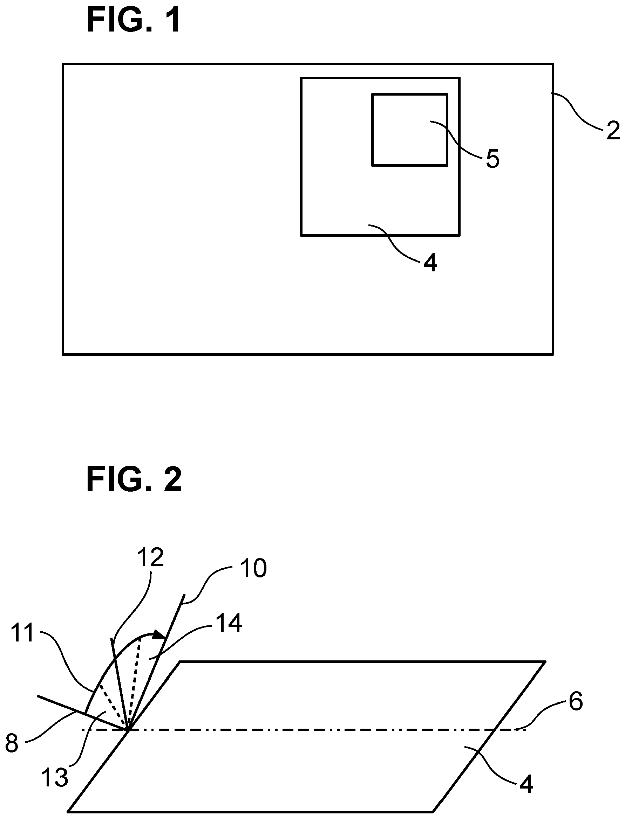

Fig. 1 zeigt in Draufsicht eine Banknote 2 oder eine noch nicht umlauffähige Vorstufe einer solchen Banknote. Die Banknote umfasst ein Sicherheitselement 4, das auf einem Flächenbereich 5 eine Mikrostruktur hat, welche zwei Motive zeigt. Die Erscheinung der Motive hängt dabei vom Kippwinkel ab, um den das Sicherheitselement beim Betrachten gekippt wird. Der Begriff der Kippung wird hierbei wie üblich auf eine Kippung zwischen dem im Wesentlichen flachen Sicherheitselement 4 und der Betrachtungsrichtung bezogen, aus der ein Betrachter auf das Sicherheitselement blickt. Diese Relativlage kann durch ein Kippen des Sicherheitselementes bei festliegender Betrachtungsrichtung erreicht werden oder durch Ändern des Betrachtungswinkels bei festliegendem Sicherheitselement. Kombinationen sind natürlich möglich. Nachfolgend wird der Einfachheit halber von einem Kippen des Sicherheitselementes ausgegangen.

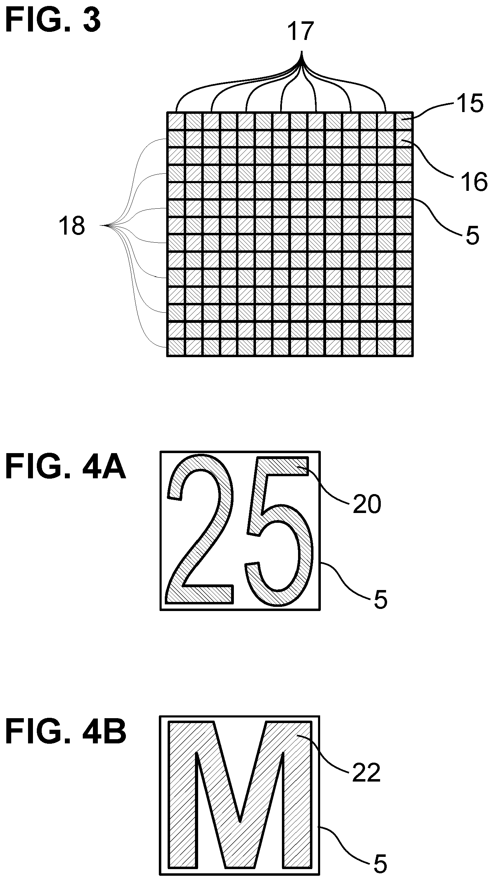

Fig. 2 zeigt, dass Bezug genommen wird auf das Kippen um eine Kippachse 6. Die hier betrachtete Kippung verläuft von einer Start-Kippstellung 8 zu einer End-Kippstellung 10 durch einen Kippwinkelbereich 11. Eine aktuelle Kippstellung 12 liegt also zwischen der Start-Kippstellung 8 und der End-Kippstellung 10. Im Extremfall liegen diese Start- bzw. Endstellungen parallel zur Oberfläche des Sicherheitselementes 4. In Fig. 2 ist weiter zu sehen, dass es eine erste Zone 13 beginnend mit der Start-Kippstellung 8 gibt und eine zweite Zone 14, endend mit der End-Kippstellung 10. Diese Zonen werden nachfolgend anhand der Fig. 4A und 4B noch näher erläutert.

Der Flächenbereich 5 des Sicherheitselementes 4 weist eine Vielzahl an ersten Mikroelementen 15 und zweiten Mikroelementen 16 auf, die ineinander verschachtelt in einem ersten Muster 17 (erste Mikroelemente 15) bzw. einem zweiten Muster 18 (zweite Mikroelemente 16) angeordnet sind. Eine derartige Anordnung und Ausgestaltung von Mikroelementen ist aus dem Stand der Technik bekannt, beispielsweise aus der WO 2018/206147 A1 oder der WO 2014/060089 A2. Die Mikroelemente sorgen dafür, dass ein erstes Motiv 20 (vgl. Fig. 4A) bzw. ein zweites Motiv 22 (vgl. Fig. 4B) präsentiert wird. Die ersten Mikroelemente 15 präsentieren dabei nur das erste Motiv 20, die zweiten Mikroelemente 16 nur das zweite Motive 22. Die ersten Mikroelemente 15 sind so ausgebildet, dass das vollständige erste Motiv 20 nur in der ersten Zone 13 des Kippwinkelbereichs 11 sichtbar ist. Gleiches gilt für das zweite Motiv 22, die zweiten Mikroelemente 16 und zweite Zone 14. Nur in dieser ist das zweite Motiv 22 gänzlich sichtbar. In der jeweiligen Zone 8, 10 ist auch nur genau das zugeordnete Motiv 20, 22 sichtbar, nicht jedoch das andere.

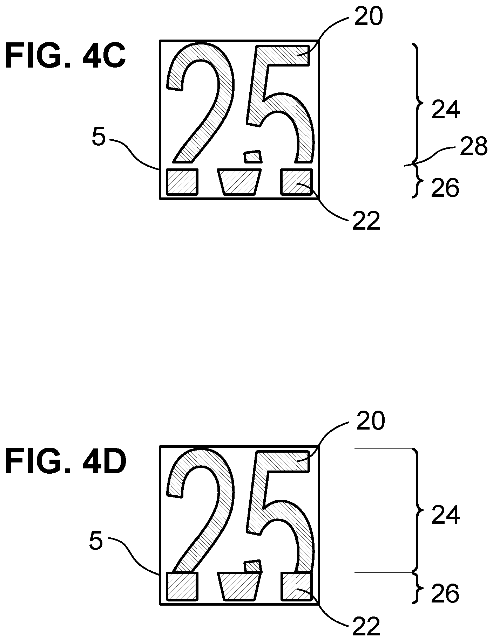

Beginnt man nun eine Kippung bei der Start-Kippstellung 8, ist zuerst nur das erste Motiv 20 sichtbar (vgl. Fig. 4A), das von den ersten Mikroelementen präsentiert wird. Führt man die Kippstellung 12 aus der ersten Zone 13 hinaus, beginnt das erste Motiv 20 von unten im Flächenbereich 5 zu verschwinden und wird durch den in diesem Bereich liegenden Teil des zweiten Motivs 22 ersetzt. Das erste Motiv 20 ist damit nur in einem Teil 24 des Flächenbereichs 5 sichtbar, im Rest 26, der vom Flächenbereich 5 verbleibt, erscheint das zweite Motiv 22 (Fig. 4C, 4D).

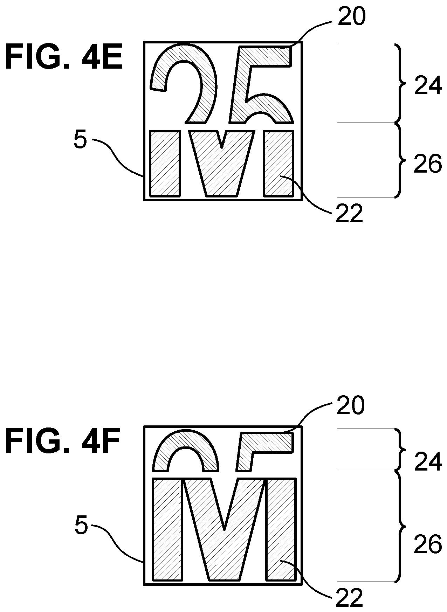

Die Motive 20, 22 ändern dabei bevorzugt ihre Größe nicht, sondern in Teil 24 bzw. Rest 26 sind nur diejenigen Abschnitte der jeweiligen Motive 20, 22 sichtbar, die diesen Abschnitten des Flächenbereichs zugeordnet sind. Ändert man die Kippstellung 12 weiter, nimmt dieser Prozess zu. Fig. 4E zeigt etwa die Mittenansicht bei senkrechter Draufsicht. Hier macht der Teil 24, in dem das erste Motiv 20 noch teilweise zu sehen ist, die obere Hälfte des Flächenbereichs 5 aus, der Rest 26, in dem der entsprechende Teil des zweiten Motivs 22 erkennbar ist, in etwa die untere Hälfte. Bei noch weiterem Kippen (Fig. 4F) wächst der vom zweiten Motiv 22 belegte Rest 26 an und der Teil 24, in dem die Reste des ersten Motivs 20 zu sehen ist, nimmt immer mehr ab, bis die Kippstellung 12 in die zweite Zone 14 gelangt, in der ausschließlich das zweite Motiv 22 im Flächenbereich 5 zu sehen ist (Fig. 4B). Es findet auf diese Weise somit eine Überblendung zwischen erstem 20 und zweitem Motiv 22 statt.

In den Fig. 4C, 4E und 4F befindet sich zwischen dem Teil 24, in dem die Reste des ersten Motivs 20 sichtbar sind, und dem Teil 26, welcher die Reste des zweiten Motivs 22 enthält (mit unterschiedlichen Größenverhältnissen je nach Kippstellung 11) eine "neutrale Zone", in der keines der beiden Motive zu sehen ist. Diese neutrale Zone ist durch einen Randstreifen 28 des Restes 26 gebildet, in dem das erste Motiv nicht mehr sichtbar ist (da der Rest 26 nicht Bestandteil des Teils 24 des Flächenbereichs 5 ist), das zweite Motiv 22 aber ebenfalls nicht erkennbar ist. Dies fördert die Erkennbarkeit des Übergangs. Es ist aber gleichermaßen möglich, wie Fig. 4D als Abwandlung zur Ausführung gemäß Fig. 4C zeigt, keinen Randstreifen 28 vorzusehen, so dass die Abschnitte des ersten Motivs 20 im Teil 24 direkt an die entsprechenden Abschnitte des zweiten Motivs 22 im Rest 26 des Flächenbereichs 5 angrenzen.

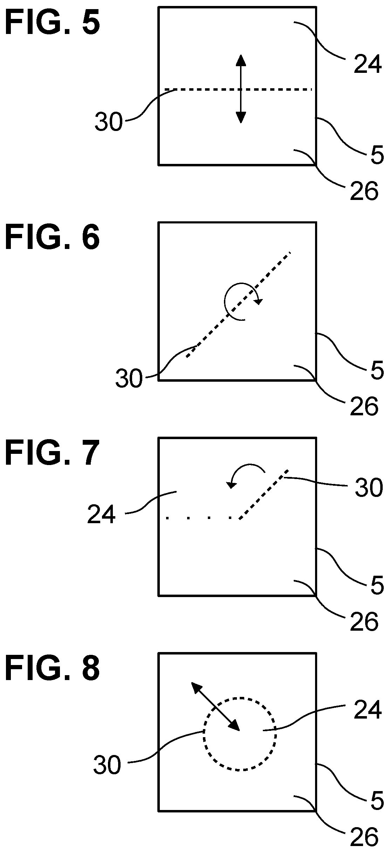

Der Übergang zwischen erstem Motiv 20 und zweitem Motiv 22 beim Kippen durch den Kippwinkelbereich erfolgt in der Ausführungsform der Fig. 4A-4F entlang einer Geraden, die sich beispielsweise parallel zur Kippachse 6 bewegt (Schrägstellungen bis zu 90° sind möglich). Mit anderen Worten, eine Grenze 30 zwischen dem Teil 24 des Flächenbereichs 5, in dem das erste Motiv 20 sichtbar ist, und dem Rest 26 des Flächenbereichs 5, in dem das zweite Motiv 22 aufscheint, hat die Form einer geraden Linie, die sich ebenfalls geradlinig bewegt. Dieses Prinzip ist in Fig. 5 noch einmal veranschaulicht. Fig. 6 zeigt, dass die Ausführungsformen darauf nicht eingeschränkt sind. Hier bewegt sich die geradlinige Grenze 30 nicht entlang einer Geraden, sondern rotiert. Fig. 7 zeigt eine weitere Abwandlung, bei der die Grenze 30 ausgehend von einer punktiert gezeichneten Grundstellung in Form eines Minutenzeigers gegen oder im Uhrzeigersinn umläuft, wenn der Wechsel erfolgt. Fig. 8 zeigt, dass die Grenze 30 nicht auf gerade Linien festgelegt ist, sondern auch die Form einer geschlossenen Bahnkurve, hier eines Kreises hat, so dass der Teil 24 beispielsweise im Inneren des Kreises liegt und der Rest 26 der Außenbereich außerhalb der Kreislinie ist.

Natürlich sind die Ausführungsformen nicht auf zwei Motive eingeschränkt; dies ist in den beschriebenen Figuren lediglich der besseren Erkennbarkeit wegen so gewählt worden. Es sind auch drei, vier oder mehr Motive möglich, die auf die beschriebene Art und Weise wechseln, wenn das Sicherheitselement gekippt wird.

Die Ausführungsformen bieten neben einer optischen Aufwertung des Motivwechsels auch einen zusätzlichen Fälschungsschutz, da nicht nur zwei verschiedene Motive entweder sichtbar oder nicht sichtbar sind, sondern auch viele Zwischenansichten des Übergangs, während sich die Grenze 30 verändert. Dies ist schwer oder nicht fälschbar.

Eine weiter gesteigerte Fälschungssicherheit erreicht man, wenn die Motive 20, 22 unterschiedliche Farbigkeit haben, was in den Fig. 4A-4F durch unterschiedliche Schraffuren angedeutet ist. Hier erhöht sich die Fälschungssicherheit, da nicht nur zwei getrennte Motive mit exakter Farbpasserung sichtbar sind, sondern die Farbpasserung auch bei allen Zwischenansichten, d.h. während der Veränderung der Grenze 30, einen vorbestimmten Verlauf hat, von einem Fälscher also nachgebildet werden müsste. Zudem ist der realisierte dynamische Farbwechsel durch die Veränderung der Lage der Grenze 30 mit einer nahezu beliebig gestaltbaren Übergangskontur, also Form der Grenze 30, deutlich auffälliger und eindrucksvoller als bei einem rein binären Wechsel zwischen zwei Farben.

### Bezugszeichenliste

- 2: Banknote
- 4: Sicherheitselement
- 5: Flächenbereich
- 6: Kippachse
- 8: Start-Kippstellung
- 10: End-Kippstellung
- 11: Kippwinkelbereich
- 12: Kippstellung
- 13: erste Zone
- 14: zweite Zone
- 15: erstes Mikroelement
- 16: zweites Mikroelement
- 17: erstes Muster
- 18: zweites Muster
- 20: erstes Motive
- 22: zweites Motiv
- 24: Teil
- 26: Rest
- 28: Randstreifen
- 30: Grenze

## Patentansprüche

1. Sicherheitselement zur Herstellung von Wertdokumenten, wie Banknoten (2), Schecks oder dergleichen, das aufweist
- eine Struktur, die ein erstes und ein zweites Motiv (20, 22) präsentiert, welche beim Kippen des Sicherheitselementes (4) über einen Kippwinkelbereich (11) ihre Erscheinung ändern, wobei
- die Struktur erste Mikroelemente (15), die gemäß einem ersten Muster (17) angeordnet sind und das erste Motiv (20) präsentieren, und zweite Mikroelemente (16), die gemäß einem zweiten Muster (18) angeordnet sind und das zweite Motiv (22) präsentieren, aufweist und
- das erste und das zweite Muster (17, 18) auf einem Flächenbereich (5) des Sicherheitselements ineinander verschachtelt sind,
**dadurch gekennzeichnet, dass**
- die ersten Mikroelemente (15) das erste Motiv (20) so präsentieren, dass das erste Motiv (20) innerhalb des Kippwinkelbereichs (11) bei einer bestimmten Start-Kippstellung (8) im Flächenbereich (5) ganz sichtbar ist und beim Verändern der Kippstellung (12) nur noch in einem mit zunehmenden Kippen abnehmenden Teil (24) des Flächenbereichs (5) sichtbar ist und beim Erreichen einer bestimmter End-Kippstellung (10) gar nicht mehr sichtbar ist, und
- die zweiten Mikroelemente (16) das zweite Motiv (22) nur im gegenüber dem Teil (24) des Flächenbereiches (5) verbleibenden Rest (26) des Flächenbereiches (5) präsentieren, wobei das zweite Motiv (22) bei der Start-Kippstellung (8) im Flächenbereich (5) gar nicht sichtbar ist und bei der End-Kippstellung (10) im Flächenbereich (5) ganz sichtbar ist.

2. Sicherheitselement nach Anspruch 1, **dadurch gekennzeichnet, dass** die ersten Mikroelemente (15) das erste Motiv (20) so präsentieren, dass beim Kippen nur der Abschnitt des erstes Motivs (20) sichtbar ist, der dem Teil (24) des Flächenbereichs (5) zugeordnet ist, und dass die zweiten Mikroelemente (16) das zweite Motiv (22) so präsentieren, dass beim Kippen nur der dem Rest (26) des Flächenbereiches (5) zugeordnete Abschnitt des zweiten Motivs (22) sichtbar ist.

3. Sicherheitselement nach einem der obigen Ansprüche, **dadurch gekennzeichnet, dass** die ersten und die zweiten Mikroelemente (15, 16) die Motive (20, 22) so präsentieren, dass beim Kippen in einem an den Teil (24) des Flächenbereichs (5) angrenzenden Randstreifen (28) des Rests (26) des Flächenbereichs (5) keines der beiden Motive (20, 22) sichtbar ist.

4. Sicherheitselement nach Anspruch 3, **dadurch gekennzeichnet, dass** der an den Teil (24) des Flächenbereichs (5) angrenzende Randstreifen eine neutrale Zone bildet, die die Motive voneinander trennt.

5. Sicherheitselement nach einem der obigen Ansprüche, **dadurch gekennzeichnet, dass** die beiden Motive (20, 22) unterschiedliche Farben haben.

6. Sicherheitselement nach einem der obigen Ansprüche, **dadurch gekennzeichnet, dass** eine Grenze (30) zwischen dem Teil (24) und dem Rest (26) des Flächenbereichs (5) eine sich mit zunehmendem Kippen bewegende gerade Linie ist oder , dass eine Grenze (30) zwischen dem Teil (24) und dem Rest (26) des Flächenbereichs (5) eine sich mit zunehmendem Kippen vergrößernde, geschlossene Kurve, insbesondere ein Kreis, ist.

7. Sicherheitselement nach einem der obigen Ansprüche, **dadurch gekennzeichnet, dass** die ersten und/ oder zweiten Mikroelemente (15, 16) Mikrospiegel aufweisen.

8. Sicherheitselement nach Anspruch 7, **dadurch gekennzeichnet, dass** die Mikrospiegel der ersten und/ oder der zweiten Mikroelemente mit einer einen Farbeindruck erzeugenden Farbbeschichtung versehen sind, wobei die Farbbeschichtungen der Mikrospiegel insbesondere durch lasierende Farben, durch Metallisierungen, durch Dünnschichtaufbauten, durch mit einer Metallisierung hinterlegte lasierende Farben, durch Lumineszenzfarben mit einer metallischen Verspiegelung, durch Strukturfarben, insbesondere durch Nano- und Binärstrukturen, und/oder durch Nanopartikelfarben gebildet sind.

9. Sicherheitselement nach einem der obigen Ansprüche, **dadurch gekennzeichnet, dass** die ersten und/ oder zweiten Mikroelemente (15, 16) Mikrobilder und Mikrolinsen aufweisen.

10. Sicherheitselement nach einem der obigen Ansprüche, **dadurch gekennzeichnet, dass** die ersten und/ oder zweiten Mikroelemente (15, 16) diffraktive Mikrostrukturen aufweisen.

11. Wertdokument mit einem Sicherheitselement (4) nach einem der Ansprüche 1 bis 10.

12. Verfahren zum Herstellen eines Sicherheitselement für Wertdokumente, wie Banknoten (2), Schecks oder dergleichen, wobei das Verfahren die Schritte aufweist
- Erzeugen einer Struktur auf einem Substrat, die ein erstes und ein zweites Motiv (20, 22) präsentiert, welche beim Kippen des Sicherheitselementes (4) über einen Kippwinkelbereich (11) ihre Erscheinung ändern, wobei
- die Struktur erste Mikroelemente (15), die gemäß einem ersten Muster (17) angeordnet werden und das erste Motiv (20) präsentieren, und zweite Mikroelemente (16), die gemäß einem zweiten Muster (18) angeordnet werden und das zweite Motiv (22) präsentieren, aufweist und
- das erste und das zweite Muster (17, 18) auf einem Flächenabschnitt (5) des Sicherheitselements ineinander verschachtelt werden, **dadurch gekennzeichnet, dass**
- die ersten Mikroelemente (15) das erste Motiv (20) so präsentieren, dass das erste Motiv (20) innerhalb des Kippwinkelbereichs (11) bei einer bestimmten Start-Kippstellung (8) im Flächenbereich (5) ganz sichtbar ist und beim Verändern der Kippstellung (12) nur noch in einem mit dem Kippen abnehmenden Teil (24) des Flächenbereichs (5) sichtbar ist und beim Erreichen einer bestimmter End-Kippstellung (10) nicht mehr sichtbar ist, und
- die zweiten Mikroelemente (16) das zweite Motiv (22) nur im gegenüber dem Teil (24) des Flächenbereiches (5) verbleibenden Rest (26) des Flächenbereiches (5) präsentieren, wobei das zweite Motiv (22) bei der Start-Kippstellung (8) im Flächenbereich (5) gar nicht sichtbar ist und bei der End-Kippstellung (10) im Flächenbereich (5) ganz sichtbar ist.

13. Verfahren nach Anspruch 12, **dadurch gekennzeichnet, dass** ein Sicherheitselement (4) gemäß einem der Ansprüche 2 bis 10 hergestellt wird.

## Claims

1. Security element for the production of documents of value, such as bank notes (2), cheques or the like, which has
- a structure which presents a first and a second motif (20, 22) which change their appearance when the security element (4) is tilted over a tilting angle range (11), wherein
- the structure has first microelements (15), which are arranged according to a first pattern (17) and present the first motif (20), and second microelements (16), which are arranged according to a second pattern (18) and present the second motif (22), and
- the first and the second pattern (17, 18) are nested within each other on a surface region (5) of the security element,
**characterized in that**
- the first microelements (15) present the first motif (20) such that the first motif (20) is visible in its entirety in the surface region (5) within the tilting angle range (11) at a specific starting tilted position (8) and, when the tilted position (12) changes, is only visible in a part (24) of the surface region (5) that decreases as the tilting increases and, upon reaching a specific end tilted position (10), is no longer visible at all, and
- the second microelements (16) only present the second motif (22) in the rest (26) of the surface region (5) remaining in relation to the part (24) of the surface region (5), wherein the second motif (22) is not visible at all in the surface region (5) at the starting tilted position (8) and is visible in its entirety in the surface region (5) at the end tilted position (10).

2. Security element according to Claim 1, **characterized in that** the first microelements (15) present the first motif (20) such that, upon tilting, only the portion of the first motif (20) that is assigned to the part (24) of the surface region (5) is visible, and **in that** the second microelements (16) present the second motif (22) such that, upon tilting, only the portion of the second motif (22) that is assigned to the rest (26) of the surface region (5) is visible.

3. Security element according to one of the above claims, **characterized in that** the first and the second microelements (15, 16) present the motifs (20, 22) such that, upon tilting, neither of the two motifs (20, 22) is visible in an edge strip (28) of the rest (26) of the surface region (5) that borders on the part (24) of the surface region (5).

4. Security element according to Claim 3, **characterized in that** the edge strip that borders on the part (24) of the surface region (5) forms a neutral zone which separates the motifs from each other.

5. Security element according to one of the above claims, **characterized in that** the two motifs (20, 22) are of different colours.

6. Security element according to one of the above claims, **characterized in that** a boundary (30) between the part (24) and the rest (26) of the surface region (5) is a straight line that moves as the tilting increases or **in that** a boundary (30) between the part (24) and the rest (26) of the surface region (5) is a closed curve, in particular a circle, which becomes larger as the tilting increases.

7. Security element according to one of the above claims, **characterized in that** the first and/or second microelements (15, 16) have micromirrors.

8. Security element according to Claim 7, **characterized in that** the micromirrors of the first and/or the second microelements are provided with an ink coating that produces a colour impression, wherein the ink coatings of the micromirrors are formed in particular by glazing inks, by metallizations, by thin-film structures, by glazing inks backed with a metallization, by luminescent inks with a metallic mirror coating, by structural inks, in particular by nano and binary structures, and/or by nanoparticle inks.

9. Security element according to one of the above claims, **characterized in that** the first and/or second microelements (15, 16) have microimages and microlenses.

10. Security element according to one of the above claims, **characterized in that** the first and/or second microelements (15, 16) have diffractive microstructures.

11. Document of value with a security element (4) according to one of Claims 1 to 10.

12. Method for producing a security element for documents of value, such as banknotes (2), cheques or the like, wherein the method has the steps of:
- producing a structure on a substrate presenting a first and a second motif (20, 22) which change their appearance when the security element (4) is tilted over a tilting angle range (11), wherein
- the structure has first microelements (15), which are arranged according to a first pattern (17) and present the first motif (20), and second microelements (16), which are arranged according to a second pattern (18) and present the second motif (22), and
- the first and the second pattern (17, 18) are nested within each other on a surface portion (5) of the security element,
**characterized in that**
- the first microelements (15) present the first motif (20) such that the first motif (20) is visible in its entirety in the surface region (5) within the tilting angle range (11) at a specific starting tilted position (8) and, when the tilted position (12) changes, is only visible in a part (24) of the surface region (5) that decreases as the tilting progresses and, upon reaching a specific end tilted position (10), is no longer visible, and
- the second microelements (16) only present the second motif (22) in the rest (26) of the surface region (5) remaining in relation to the part (24) of the surface region (5), wherein the second motif (22) is not visible at all in the surface region (5) at the starting tilted position (8) and is visible in its entirety in the surface region (5) at the end tilted position (10).

13. Method according to Claim 12, **characterized in that** a security element (4) according to Claims 2 to 10 is produced.

## Revendications

1. Élément de sécurité pour la production de documents de valeur, tels que des billets de banque (2), des chèques ou analogues, ledit élément de sécurité présentant
- une structure qui comporte un premier et un second motif (20, 22) qui changent d'aspect lorsque l'élément de sécurité (4) est incliné sur une plage d'angles d'inclinaison (11),
- la structure comprenant des premiers micro-éléments (15), qui sont agencés selon un premier agencement (17) et présentent le premier motif (20), et des seconds micro-éléments (16), qui sont agencés selon un second agencement (18) et présentent le second motif (22), et
- les premier et second agencements (17, 18) étant emboîtés l'un dans l'autre sur une région de surface (5) de l'élément de sécurité,
**caractérisé en ce que**
- les premiers micro-éléments (15) présentent le premier motif (20) de telle sorte que le premier motif (20) soit entièrement visible dans la région de surface (5) à l'intérieur de la plage d'angles d'inclinaison (11) à un emplacement d'inclinaison de début (8) spécifique et, que lorsque la position d'inclinaison (12) change, il soit visible uniquement dans une partie (24) de la région de surface (5) qui diminue à mesure que l'inclinaison augmente et, que lorsqu'il atteint un emplacement d'inclinaison de fin (10) spécifique, il ne soit plus du tout visible, et
- les seconds micro-éléments (16) présentent le second motif (22) uniquement dans le reste (26) de la région de surface (5) restant par rapport à la partie (24) de la région de surface (5), le second motif (22) n'étant pas visible du tout dans la région de surface (5) au niveau de l'emplacement d'inclinaison de début (8) et étant entièrement visible dans la région de surface (5) à l'emplacement d'inclinaison de fin (10).

2. Élément de sécurité selon la revendication 1, **caractérisé en ce que** les premiers micro-éléments (15) présentent le premier motif (20) de telle sorte que, lors de l'inclinaison, seule la section du premier motif (20) associée à la partie (24) de la région de surface (5) soit visible, et **en ce que** les seconds micro-éléments (16) présentent le second motif (22) de telle sorte que, lors de l'inclinaison, seule la section du second motif (22) associée au reste (26) de la région de surface (5) soit visible.

3. Élément de sécurité selon l'une quelconque des revendications précédentes, **caractérisé en ce que** les premiers et seconds micro-éléments (15, 16) présentent les motifs (20, 22) de telle sorte que, lors de l'inclinaison, aucun des deux motifs (20, 22) ne soit visible dans une bande de bordure (28) du reste (26) de la région de surface (5) adjacente à la partie (24) de la région de surface (5).

4. Élément de sécurité selon la revendication 3, **caractérisé en ce que** la bande de bordure adjacente à la partie (24) de la région de surface (5) forme une zone neutre qui sépare les motifs l'un de l'autre.

5. Élément de sécurité selon l'une quelconque des revendications précédentes, **caractérisé en ce que** les deux motifs (20, 22) ont des couleurs différentes.

6. Élément de sécurité selon l'une quelconque des revendications précédentes, **caractérisé en ce qu'**une limite (30) entre la partie (24) et le reste (26) de la région de surface (5) est une ligne droite se déplaçant lorsque l'inclinaison augmente, ou **en ce qu'**une limite (30) entre la partie (24) et le reste (26) de la région de surface (5) est une courbe fermée, en particulier un cercle, qui s'agrandit lorsque l'inclinaison augmente.

7. Élément de sécurité selon l'une quelconque des revendications précédentes, **caractérisé en ce que** les premiers et/ou seconds micro-éléments (15, 16) comportent des micro-miroirs.

8. Élément de sécurité selon la revendication 7, **caractérisé en ce que** les micro-miroirs des premiers et/ou des seconds micro-éléments sont pourvus d'un revêtement coloré produisant une impression de couleur, les revêtements colorés des micro-miroirs étant notamment formés par des couleurs translucides, par des métallisations, par des structures en couches minces, par des couleurs translucides avec dépôt d'une métallisation, par des couleurs luminescentes avec une réflexion métallique, par des couleurs structurées, en particulier par des nanostructures et des structures binaires, et/ou par des couleurs à nanoparticules.

9. Élément de sécurité selon l'une quelconque des revendications précédentes, **caractérisé en ce que** les premiers et/ou seconds micro-éléments (15, 16) comportent des micro-images et des microlentilles.

10. Élément de sécurité selon l'une quelconque des revendications précédentes, **caractérisé en ce que** les premiers et/ou seconds micro-éléments (15, 16) comportent des microstructures diffractantes.

11. Document de valeur comprenant un élément de sécurité (4) selon l'une quelconque des revendications 1 à 10.

12. Procédé de production d'un élément de sécurité pour des documents de valeur, tels que des billets de banque (2), des chèques ou analogues, le procédé comprenant les étapes suivantes :
- création d'une structure sur un substrat qui présente un premier et un second motif (20, 22) qui changent d'aspect lorsque l'élément de sécurité (4) est incliné sur une plage d'angles d'inclinaison (11),
- la structure comprenant des premiers micro-éléments (15), qui sont agencés selon un premier agencement (17) et présentent le premier motif (20), et des seconds micro-éléments (16), qui sont agencés selon un second agencement (18) et présentent le second motif (22), et
- les premier et second agencements (17, 18) étant emboîtés l'un dans l'autre sur une section de surface (5) de l'élément de sécurité,
**caractérisé en ce que**
- les premiers micro-éléments (15) présentent le premier motif (20) de telle sorte que le premier motif (20) soit entièrement visible dans la région de surface (5) à l'intérieur de la plage d'angles d'inclinaison (11) à un emplacement d'inclinaison de début (8) spécifique et, que lorsque la position d'inclinaison (12) change, il soit visible uniquement dans une partie (24) de la région de surface (5) qui diminue avec l'inclinaison et, que lorsqu'il atteint un emplacement d'inclinaison de fin (10) spécifique, il ne soit plus visible, et
- les seconds micro-éléments (16) présentent le second motif (22) uniquement dans le reste (26) de la région de surface (5) restant par rapport à la partie (24) de la région de surface (5), le second motif (22) n'étant pas visible du tout dans la région de surface (5) au niveau de l'emplacement d'inclinaison de début (8) et étant entièrement visible dans la région de surface (5) à l'emplacement d'inclinaison de fin (10).

13. Procédé selon la revendication 12, **caractérisé en ce qu'**un élément de sécurité (4) selon l'une quelconque des revendications 2 à 10 est fabriqué.
